# FASCICULE DE BREVET EUROPEEN

(11) **EP 4 548 504 B1**
(45) Date de publication et mention de la délivrance du brevet: **14.01.2026**
(21) Numéro de dépôt: 23822416.6
(22) Date de dépôt: 13.11.2023
(51) Int. Cl.: H04B 10/118

(54) **PROCÉDÉ ET SYSTÈME DE COLLECTE DE DONNÉES PAR VOIE OPTIQUE**
VERFAHREN UND SYSTEM ZUR OPTISCHEN DATENSAMMLUNG
METHOD AND SYSTEM FOR OPTICAL DATA COLLECTION

(30) Priorité: 13.12.2022 FR 2213183
(43) Date de publication de la demande: 07.05.2025
(73) Titulaire: Airbus Defence and Space SAS, 31402 Toulouse Cedex 4 (FR)
(72) Inventeur: JEZEQUEL, Yoann, 31402 TOULOUSE CEDEX 4 (FR); DE NAUROIS, Guy-Maël, 31402 TOULOUSE CEDEX 4 (FR)
(74) Mandataire: Plasseraud IP
(86) Numéro de dépôt international: PCT/FR2023/051779
(87) Numéro de publication internationale: WO 2024/126905

(56) Documents cités:
- WANG YIHUA: "Ground Station Site Selection with Real Cloud Data for Satellite-Ground Optical Networking", 11TH EAI INTERNATIONAL CONFERENCE ON WIRELESS AND SATELLITE SYSTEMS, WISATS 2020, vol. 357, 1 January 2021 (2021-01-01), pages 352 - 361, XP093074388
- WOJCIK GARY S. ET AL: "Deep-space to ground laser communications in a cloudy world", LASER-BASED MICRO- AND NANOPACKAGING AND ASSEMBLY II, vol. 5892, 18 August 2005 (2005-08-18), pages 589203, XP093074392, ISSN: 0277-786X, DOI: 10.1117/12.615435
- EFREM CHRISTOS N ET AL: "Low-complexity optimization algorithm for ground network design in optical satellite networks", PROCEEDINGS OF THE SPIE, SPIE, US, vol. 11852, 11 June 2021 (2021-06-11), pages 118525Q - 118525Q, XP060144865, ISSN: 0277-786X, ISBN: 978-1-5106-5738-0, DOI: 10.1117/12.2600010
- LYRAS NIKOLAOS K ET AL: "Cloud Free Line of Sight Prediction Modeling for Optical Satellite Communication Networks", IEEE COMMUNICATIONS LETTERS, IEEE SERVICE CENTER, PISCATAWAY, NJ, US, vol. 21, no. 7, 1 July 2017 (2017-07-01), pages 1537 - 1540, XP011655922, ISSN: 1089-7798, [retrieved on 20170710], DOI: 10.1109/LCOMM.2017.2681073

## Description

### Domaine technique

La présente divulgation concerne un procédé et un système de collecte de données par voie optique, les données étant collectées par un satellite à partir d'un ensemble de stations au sol.

### Technique antérieure

La quantité de données générée dans tous les secteurs de l'industrie croît à un rythme très important. On peut quantifier ces données en Peta-octets, un peta-octet représentant 10¹⁵ octets soit un million de Giga-octets, voire en Exa-octets, représentant 10¹⁸ octets soit un milliard de Giga-octets. On évalue par exemple à environ 40 Peta-octets la quantité de données générée en un an par le milieu hospitalier aux USA, à environ 180 Peta-octets la quantité de données générée en un an par l'industrie aéronautique, ou encore à 500 Peta-octets, la quantité de données générée en un an par l'industrie automobile, avec l'essor des véhicules connectés et autonomes.

Les données générées sont la plupart du temps enregistrées sur le cloud, c'est-à-dire sur un ou plusieurs serveurs distants auxquels sont connectées les sources de production des données, par un réseau de télécommunications. Cependant, les réseaux de télécommunications radiofréquences, reposant par exemple sur les normes 4G ou 5G ou encore les communications par satellite présentent une bande passante limitée qui ne permet pas de transmettre des quantités de données de l'ordre du Peta-octet ou de l'exa-octet.

Des solutions de transfert de données par fibre optique au sol sont également employées, mais ces solutions impliquent que le transfert de données ne peut avoir lieu qu'entre deux terminaux connectés entre eux par la fibre, ce qui limite la taille et la complexité du réseau, et ne permet pas d'équiper des terminaux situés dans des zones reculées, que ce soit des zones terrestres de faible connectivité mais aussi par exemple des stations pétrolières, des navires, des aéronefs ou drones.

Le document "Ground Station Site Selection with Real Cloud Data for Satellite-Ground Optical Networking", WANG YIHUA,11TH EAl INTERNATIONAL CONFERENCE ON WIRELESS AND SATELLITE SYSTEMS, WISATS 2020, vol. 357, 1 janvier 2021 (2021-01-01), pages 352-361, décrit un procédé de collecte de données par liaison optique, comprenant au moins une étape de collecte des conditions passées de couverture nuageuses d'une pluralité de stations émettrices clientes au sol, une étape de collecte des conditions passées de couverture nuageuses d'au moins un centre récepteur de collecte des données au sol, une étape de détermination, pour une pluralité de couples associant une des stations émettrices clientes audit centre récepteur, de probabilités de succès de transferts de données, via au moins un satellite de télécommunication déterminé, une étape de collecte des volumes de données, de chaque station émettrice cliente, une étape de détermination d'un ordre de priorité associé aux stations émettrices clientes pour des traitements en série de transferts de volumes de données déterminés, une étape de sélection de station émettrice cliente active, comprenant une validation des prévisions temps réel favorables sur la couverture nuageuse en commençant par la station émettrice cliente la plus prioritaire avec la plus grande disponibilité, et une étape d'activation du transfert des données pour la station émettrice cliente sélectionnée.

Pour pouvoir transférer des données depuis des zones reculées, des solutions de transfert de données physiques sont possibles, ces solutions comprenant le déplacement, par des moyens de transport routiers ou aériens, de moyens de stockage physiques (disques durs) stockant les données à transférer. Cette solution présente cependant de nombreux inconvénients, dont notamment l'empreinte carbone élevée, la difficulté à changer d'échelle de déploiement, la durée des transferts ainsi que la sécurité associée.

Il existe donc un besoin pour pouvoir transférer des volumes de données importants, y compris depuis des emplacements de stockage de données situés dans des zones reculées. Résumé

La présente divulgation vient améliorer la situation.

Il est proposé un procédé de collecte de données par liaison optique, caractérisé en ce qu'il comprend au moins :
- une étape de collecte des conditions passées de couverture nuageuses d'une pluralité de stations émettrices clientes au sol,
- une étape de collecte des conditions passées de couverture nuageuses d'au moins un centre récepteur de collecte des données au sol,
- une étape de détermination, pour une pluralité de couples association une des stations émettrices clientes audit centre récepteur, de probabilités de succès de transferts de données, via au moins un satellite de télécommunication déterminé, pour plusieurs quantités prédéterminées de données, en fonction d'un nombre de jours alloués au transfert allant de au moins un jour à un nombre prédéterminé de jours, à une période déterminée de l'année pour laquelle les conditions passées lesdites probabilités de succès de transferts de données étant déterminées pour une période déterminée de l'année, à partir des conditions passées de couverture nuageuse à la même période de l'année, et à partir des capacités des liens montant et descendant,
- une étape de collecte :
   o Des volumes de données, de chaque station émettrice cliente, en attente de transfert,
   o Des vitesses de remplissage de chaque station émettrice cliente, par rapport à leur capacité de stockage, et
   o D'une durée de validité des données produites par chaque station émettrice cliente,
- une étape de détermination d'un ordre de priorité associé aux stations émettrices clientes pour des traitements en série de transferts de volumes de données déterminés de façon à :
   o éviter que des données soient périmées par rapport aux durées de validité associées à chaque station émettrice cliente, avec une marge de sécurité temporelle déterminée en fonction d'au moins une probabilité de transfert associée à chaque station émettrice clientes,
   o éviter que les stations émettrices clientes dépassent leur capacité de stockage, avec une marge de sécurité volumétrique déterminée et une marge de sécurité temporelle déterminée en tenant compte de la vitesse de remplissage par rapport à la capacité de stockage associée à chaque station émettrice cliente, en fonction d'au moins une probabilité de transfert associée à chaque station émettrice cliente,
- une étape de sélection de station émettrice cliente active, comprenant une validation des prévisions temps réel favorables sur la couverture nuageuse en commençant par la station émettrice cliente la plus prioritaire, puis en passant à la station émettrice cliente suivante, selon l'ordre de priorité, en cas de prévisions temps réel défavorables pour la station émettrice cliente la plus prioritaire,
- une étape d'activation du transfert des données pour la station émettrice cliente sélectionnée.

Dans des modes de réalisation, le procédé comprend en outre, après l'activation du transfert des données, la répétition du procédé à partir de l'étape de collecte des volumes de données, des vitesses de remplissage et de la durée de validité des données.

Dans des modes de réalisation, l'ordre de priorité associé aux stations émettrices clientes est déterminé de sorte à satisfaire en priorité la condition d'évitement que les données soient périmées par rapport aux durées de validité associées à chaque station émettrice cliente.

Dans des modes de réalisation, la probabilité de succès de transferts de données, pour plusieurs quantités prédéterminées de données, en fonction d'un nombre de jours alloués au transfert allant de au moins un jour à un nombre prédéterminé de jours, est déterminée par calcul d'une fonction de distribution cumulée.

Dans des modes de réalisation, la marge de sécurité temporelle déterminée pour la détermination de l'ordre de priorité est d'au moins un jour.

Dans des modes de réalisation, la marge de sécurité volumétrique déterminée pour la détermination de l'ordre de priorité est d'au moins 5% de la capacité de stockage de la station cliente émettrice considérée.

Dans des modes de réalisation, à l'étape d'activation du transfert, le transfert réalisé est au moins partiel de façon à placer la station émettrice cliente dans un état sécurisé dans lequel les données produites ne sont pas périmées avec une marge de sécurité temporelle déterminée dans lequel la capacité de stockage n'est pas dépassée avec une marge volumétrique déterminée compte-tenu de la marge de sécurité temporelle déterminée.

Dans des modes de réalisation, la marge de sécurité temporelle pour assurer l'état sécurisé d'une station émettrice cliente est d'au moins deux jours, et la marge de sécurité volumétrique est d'au moins 10% de la capacité de stockage de la station émettrice cliente considérée.

Dans des modes de réalisation, les prévisions temps réel sur la couverture nuageuse sont générées par un capteur observant le ciel.

Selon un autre objet, il est également décrit un produit programme d'ordinateur, comprenant des instructions de code pour la mise en œuvre du procédé selon la description qui précède, lorsqu'il est mis en œuvre par un calculateur.

Selon un autre objet, il est également décrit un support d'enregistrement non transitoire lisible par un ordinateur sur lequel est enregistré un programme pour la mise en œuvre du procédé selon la description qui précède lorsque ce programme est exécuté par un calculateur.

Selon un autre objet, il est décrit un système de transfert de données par liaison optique, caractérisé en ce qu'il comprend une pluralité de stations émettrices clientes au sol, au moins un récepteur de collecte des données au sol, au moins un satellite apte à être en communication par liaison optique avec les stations émettrices et le récepteur de collecte, et un terminal de supervision configuré pour mettre en œuvre le procédé selon la description qui précède.

Dans des modes de réalisation, le terminal de supervision est intégré dans une station de commande au sol et apte à communiquer avec les stations émettrices au sol pour l'envoi d'instructions d'activation de transfert de données depuis lesdites stations vers le satellite.

Le procédé proposé permet avantageusement de transférer des volumes importants depuis des stations émettrices au sol vers un centre récepteur au sol également, via un satellite en liaison optique avec les stations émettrices et le centre récepteur. En effet, par temps clair, le débit de transfert de données par voie optique entre une station au sol et un satellite peut potentiellement atteindre des débits supérieurs au Terabit par seconde.

Une voie optique de communication étant perturbée par la couverture nuageuse terrestre, le procédé proposé permet avantageusement encore de tirer profit d'un historique de couverture nuageuse des zones correspondant aux stations émettrices et aux centres récepteurs pour améliorer la probabilité de succès d'un transfert de données.

De plus, selon un autre avantage, le procédé tient également compte d'une durée de validité des données à transférer, d'une vitesse de remplissage des stations collectrices et d'une capacité de stockage, pour prioriser les données à transférer et ainsi garantir le transfert des données avant que la validité des données n'ait expiré et/ou que les capacités de stockage soient atteintes.

### Brève description des dessins

D'autres caractéristiques, détails et avantages apparaîtront à la lecture de la description détaillée ci-après, et à l'analyse des dessins annexés, sur lesquels :
**Fig. 1**

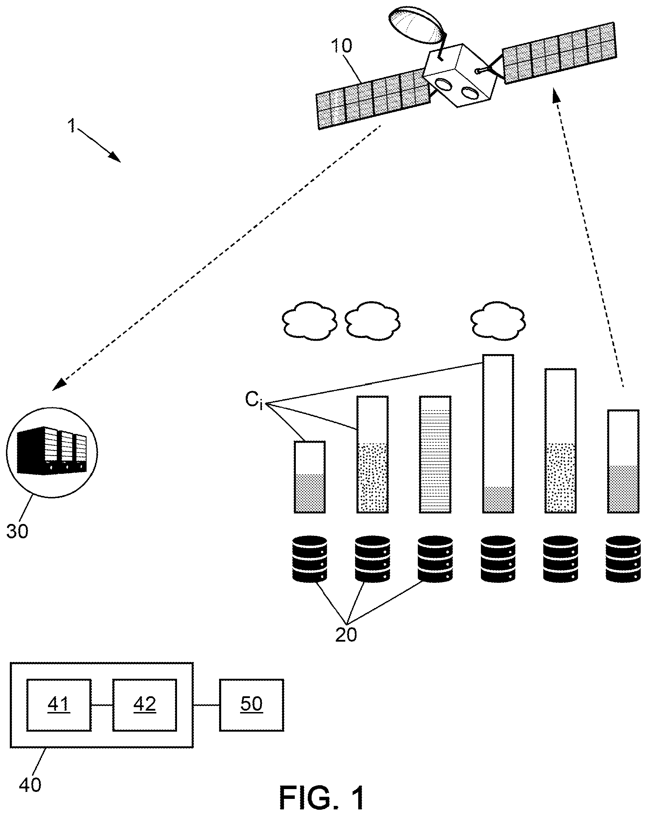

   [Fig. 1] montre un schématiquement un système de transfert de données selon un exemple de réalisation.
**Fig. 2**

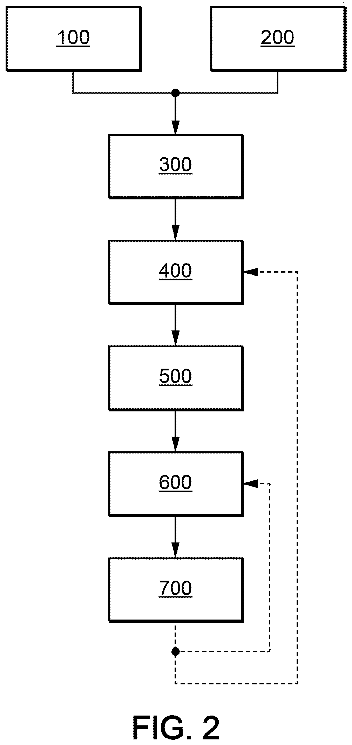

   [Fig. 2] représente schématiquement les principales étapes d'un procédé selon un exemple de réalisation.
**Fig. 3a**

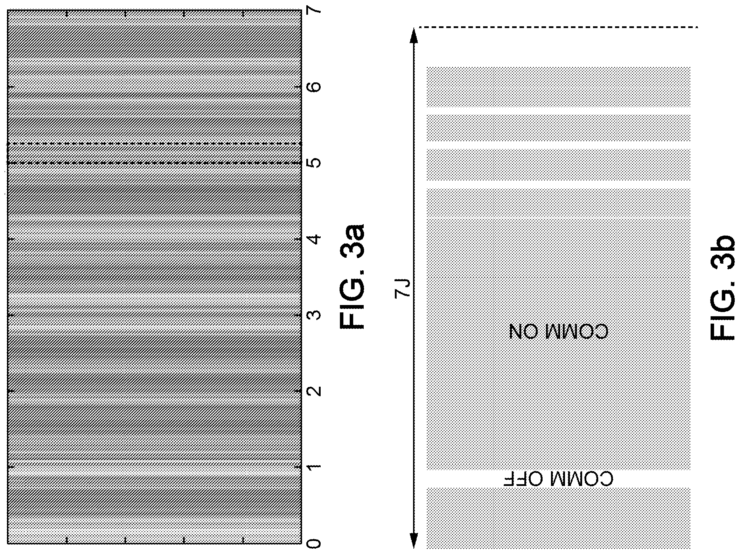

   [Fig. 3a] représente un exemple d'historique de conditions de couverture nuageuse d'une zone géographique donnée pour une période de sept ans.
**Fig. 3b**
   [Fig. 3b] représente un exemple d'historique de conditions de couverture nuageuse de la même zone géographique pour une période de sept jours.
**Fig. 4**

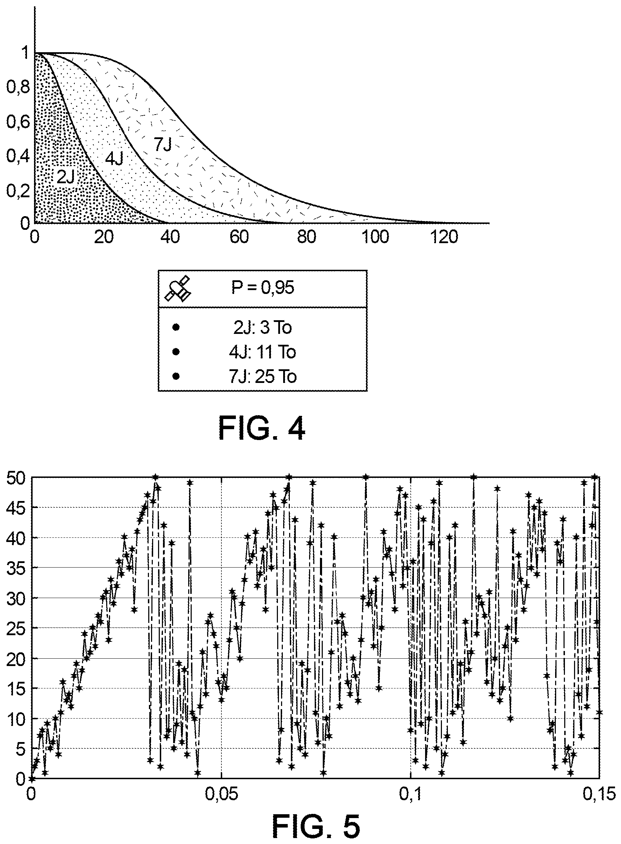

   [Fig. 4] représente un exemple de probabilités de succès de transferts de données par voie optique entre une station au sol et un satellite de télécommunication, en fonction de la quantité de données transférées et d'un nombre de jours alloués au transfert.
**Fig. 5**
   [Fig. 5] représente un exemple de mise en œuvre simulée de l'invention.

### Description des modes de réalisation

En référence à la figure 1, on a représenté un exemple de système 1 de transfert de données par liaison optique. Ce système comprend par exemple un satellite 10, une pluralité de stations émettrices clientes au sol 20 et un ou plusieurs centre(s) récepteur(s) de collecte de données au sol 30. Le procédé selon l'invention pourrait être utilisé via un ou plusieurs satellites géostationnaires ou via des constellations défilantes. Les satellites utilisés pour établir le lien optique de connexion peuvent avoir une orbite du type GEO (géostationnaire), MEO (medium earth orbit) ou LEO (low earth orbit). Dans le cas d'un satellite non-géostationnaire les fenêtres de visibilité de chaque station au sol par chaque satellite sont précisément connues et déterminées à l'avance. Un satellite défilant peut notamment contrôler son pointage en continu vers une station au sol, pendant une période déterminée. Le pointage d'un satellite vers une station au sol est par exemple réalisé par un contrôle de l'attitude du satellite. On peut aussi envisager que la tête de communication optique à bord du satellite s'oriente par rapport au corps du satellite, pour pointer vers une station au sol. Le pointage d'un satellite est modifié successivement pour pointer successivement vers différentes stations au sol. La tête de communication optique comprend par exemple un télescope optique. Il est considéré dans la suite que le transfert de données a lieu d'une station émettrice cliente 20 vers un centre récepteur 30, par l'intermédiaire du satellite 10. On considère également que le terme transfert implique que la station émettrice cliente ne stocke plus les données transférées une fois que le transfert a eu lieu, et que par conséquent le volume de données transférées est devenu disponible au niveau de la station émettrice pour stocker de nouvelles données.

Les stations émettrices clientes au sol peuvent par exemple correspondre à des équipements stockant temporairement les données à transférer, et le cas échéant produisant également ces données. Ces stations peuvent être de natures variées : par exemple, un centre de stockage de données, un équipement mobile générant et stockant temporairement des données tel qu'un aéronef, un HAPS (high altitude platform system), un drone (aéronautique, maritime ou terrestre), un navire, un sous-marin, ou un véhicule terrestre, ou encore un centre fixe de production et de stockage temporaire de données, tel qu'un hôpital, un site industriel, un centre de recherche, une plate-forme pétrolière, etc. Toutes les stations émettrices au sol comprennent donc une capacité de stockage respective déterminée pour le stockage des données.

Les centres récepteurs de collecte de données 30 peuvent par exemple être des centres de stockage de données, pouvant avantageusement présenter une capacité de stockage de données supérieure à celle d'une ou plusieurs stations émettrices 20.

Par conséquent, le terme « au sol », désigné par « ground segment » en anglais, n'est pas à interpréter comme impliquant un contact permanent avec le sol terrestre, mais comme le fait que la station émettrice ou le centre récepteur est situé, lors du transfert des données, dans l'atmosphère terrestre.

Chacune des stations émettrices 20 et chacun des centres récepteurs 30 est apte à envoyer ou recevoir des données au/du satellite par liaison optique. Les stations émettrices 20 et le satellite 10 sont par exemple équipés d'un émetteur laser (non représenté) et d'un dispositif de codage adapté pour convertir les données à émettre en signal laser. Le satellite recevant les données produites au sol peut, par exemple dans le cas d'une architecture transparente, ne pas réaliser de stockage temporaire et procède ainsi à une réception, une ré-amplification et un renvoi au sol. Le satellite recevant les données produites au sol peut également, par exemple, dans le cas d'une architecture régénérative, réaliser un stockage temporaire et procède ainsi à une réception, un décodage, un stockage temporaire, une régénération du signal, une amplification puis un renvoi au sol. Le décodage comprend par exemple un nettoyage du signal par exemple par des filtres et une remise en cohérence de phase. Le ou les centres récepteurs 30 sont quant à eux équipés d'un récepteur laser (non représenté) et d'un dispositif de décodage adapté pour convertir un signal laser reçu en données. Un instrument de communication est par exemple du type LCT (Laser Communication Terminal).

A titre d'exemple, les stations émettrices 20 et les centres récepteurs 30 peuvent en outre être adaptés pour communiquer avec le satellite par radiofréquence afin d'échanger des informations opérationnelles distinctes des données transférées, comme par exemple pour établir une connexion entre une station émettrice et le satellite avant la mise en œuvre du transfert de données.

Le système 1 de transfert de données comprend en outre un terminal 40 de supervision des transferts de données, comprenant par exemple un ou plusieurs calculateurs, tels que des processeurs, microprocesseurs, carte graphique (GPU) etc, et une mémoire stockant des instructions de code exécutées par le ou les calculateurs pour mettre en œuvre le procédé décrit ci-après et représenté schématiquement sur la figure 2. La mémoire est par exemple utilisée également pour stocker des informations collectées par le terminal 40 de supervision lors de la mise en œuvre de ce procédé. Le terminal 40 de supervision peut être intégré à une station de commande au sol en liaison de communication avec le ou les satellites pour envoyer et recevoir les signaux TM (télémétrie) et TC (télécommande) au satellite. Le terminal 40 de supervision est en outre adapté pour communiquer avec les stations émettrices 20 pour envoyer à ces stations des instructions d'activation de transfert de données et pour recevoir des informations telles que par exemple le volume de données actuellement stocké par une station, le taux de remplissage, ou encore la durée de validité des données. La communication entre le terminal 40 de supervision et les stations émettrices peut être réalisée par exemple via un réseau de télécommunications filaire ou optique, un réseau de télécommunications sans fil terrestre ou spatial, telles que les communications par ondes radiofréquences. Le terminal 40 de supervision est par exemple en outre adapté pour communiquer avec un ou plusieurs capteurs 50 adaptés pour réaliser des prévisions météorologiques à court-terme de zones correspondant à l'emplacement d'une ou plusieurs stations émettrices 20.

En référence à la figure 2, le procédé comprend par exemple une étape 100 de collecte des conditions passées de couverture nuageuse d'une pluralité de stations émettrices clientes au sol, et une étape 200 de collecte des conditions passées de couverture nuageuse d'au moins un centre récepteur de collecte au sol 30, ces deux étapes pouvant être réalisées dans un ordre quelconque.

Dans le cas d'une station émettrice ou d'un centre récepteur fixes, la position de chaque station ou centre récepteur peut être préalablement connue, et l'étape 100, respectivement 200, comprend la collecte des conditions passées de couverture nuageuse d'une zone géographique incluant la station émettrice ou le centre récepteur correspondant.

Dans le cas d'une station émettrice ou le cas échéant d'un centre récepteur mobile, l'étape 100, respectivement 200 peut comprendre la collecte des conditions passées de couverture nuageuse d'une ou plusieurs zones susceptibles de comprendre la position actuelle, voire des positions futures prévisionnelles, de la station émettrice ou du centre récepteur lors de la mise en œuvre du transfert. Par exemple, le terminal 40 de supervision peut disposer d'une ou plusieurs trajectoires possibles de la station mobile ou du terminal récepteur, ou d'un ensemble de zones dans lesquelles la station ou le terminal récepteur est susceptible de se trouver, et l'étape 100 peut comprendre la collecte des conditions passées de couverture nuageuse desdites zones ou d'un ensemble de zones dans lesquelles une station émettrice ou un terminal récepteur mobile est susceptible de se trouver compte-tenu des trajectoires communiquées.

Dans le cas d'une station émettrice comme d'un centre récepteur, la collecte 100, 200 des conditions de couverture nuageuse comprend avantageusement des statistiques de présence ou d'absence de couverture nuageuse pour une période passée d'une durée déterminée, par exemple une ou plusieurs années. Les statistiques de présence ou d'absence de couverture nuageuse comprennent avantageusement la valeur d'un indicateur de couverture nuageuse déterminé pour une fenêtre temporelle glissante sur la période considérée, la fenêtre temporelle étant de taille constante. Selon un exemple non limitatif, la fenêtre temporelle peut correspondre à une durée d'une journée ou moins, par exemple une ou plusieurs heures, ou selon un autre exemple moins d'une heure, par exemple quelques minutes.

L'indicateur de couverture nuageuse est par exemple binaire, c'est-à-dire qu'il correspond à la présence ou l'absence de couverture nuageuse pour la fenêtre temporelle déterminée. L'indicateur de couverture nuageuse est par exemple utilisé pour déterminer des conditions météorologiques favorables au transfert de données par voie optique entre un satellite et un terminal au sol. Cet indicateur est représentatif d'un bilan de liaison qui détermine si une communication laser est ou non possible. Le bilan de liaison dépend de la qualité du canal de propagation atmosphérique. Certains nuages peuvent par exemple avoir une incidence limitée sur la communication laser. L'indicateur de couverture nuageuse est par exemple déterminé en fonction du masque nuageux et de la qualité du canal de transmission.

En référence à la figure 3a, on a représenté un exemple de conditions passées de couverture nuageuse pour une zone déterminée et pour une période de temps correspondant à 7 ans, la fenêtre temporelle considérée étant de 15 minutes, et sur la figure 3b on a représenté un détail de ces conditions pour la même zone et pour une période de temps de 7 jours, la fenêtre temporelle étant la même. L'indicateur est binaire puisque les zones blanches sont des zones de couverture nuageuses et les zones foncées sont des zones d'absence de couverture nuageuse.

Le procédé comprend ensuite une étape 300 de détermination, à partir des conditions passées de couverture nuageuses acquises pour un ensemble de zones correspondant à un ensemble de positions des stations émettrices et du ou des récepteurs de collecte, de probabilités de succès de transferts de données pour un ensemble de couples comprenant une station émettrice et un récepteur de collecte, le transfert de données étant réalisé par liaison optique de la station émettrice au satellite et du satellite au récepteur de collecte. Les probabilités de succès de transferts de données sont par exemple calculées, pour chaque couple station émettrice et récepteur de collecte, pour plusieurs quantités prédéterminées de données, en fonction d'un nombre de jours alloués au transfert, ce nombre de jours étant variable entre un jour et un nombre prédéterminé de jours, par exemple jusqu'à 7 jours ou jusqu'à 10 jours. De plus, les probabilités de succès de transferts de données sont par exemple calculées pour une période déterminée de l'année, à partir des conditions passées de couverture nuageuse à la même période de l'année.

Les probabilités de succès de transfert de données tiennent par exemple compte des capacités des liens montants et descendants. Un « lien montant » désigne la liaison optique entre une station émettrice cliente et le satellite, et la « capacité d'un lien montant » correspond au débit de données pouvant être transféré de la station émettrice cliente au satellite, exprimé par exemple en nombre de bits par seconde ou toute puissance de 10 (par exemple nombre de Gbit/s), par seconde. Un « lien descendant » désigne la liaison optique entre le satellite et un récepteur de collecte au sol, et la « capacité d'un lien descendant » correspond au débit de données pouvant être transféré du satellite au récepteur, exprimé en nombre de bits par seconde ou toute puissance de 10, par seconde.

Les probabilités de succès sont par exemple obtenues par application d'une fonction de distribution cumulée de la probabilité de compléter un transfert de données en une période de temps déterminée, en fonction du volume de données à transférer. Cette fonction est calculée pour plusieurs périodes de temps, c'est-à-dire plusieurs nombres de jours alloués au transfert, entre 1 et le nombre prédéterminé de jours. En référence à la figure 4, on a représenté des exemples de fonction de distribution cumulées calculées pour deux, quatre et sept jours (notées respectivement 2J, 4J et 7J sur la figure) pour un lien montant dont la capacité est de 1.8 Gbit/s. L'axe des abscisses représente le volume de données à transférer, en Tbits, et l'axe des ordonnées représente la probabilité de succès du transfert. Avantageusement le transfert étalé sur plusieurs jours, sur une période de temps de plus en plus longue, permet d'obtenir des probabilités de transfert nettement améliorées pour les volumes importants de données. Avantageusement encore, pour une même probabilité de transfert de 95%, notée P=0.95 sur la figure, le volume augmente considérablement respectivement à 3To, 11To et 25To pour une visibilité étalée sur respectivement 2, 4 et 7 jours.

Le procédé comprend ensuite une étape 400 de collecte d'informations en temps réel, en vue de déterminer un ordre de priorité 500 associé aux stations émettrices clientes à mettre en œuvre pour le traitement en série de transferts de données.

Les informations collectées à l'étape 400 comprennent :
- Des volumes de données en attente de transfert au niveau de chaque station émettrice cliente,
- Des vitesses de remplissage de chaque station émettrice cliente, c'est-à-dire de la vitesse d'augmentation du volume de données stocké par chaque station émettrice client, par rapport à sa capacité de stockage, et
- D'une durée de validité des données produites par chaque station émettrice cliente, la durée de validité déterminant un délai maximum requis pour le transfert des données.

A titre d'exemple, dans le cas où les stations émettrices clientes comprennent des stations mobiles, les informations collectées à l'étape 400 peuvent également comprendre une position géographique actuelle de chaque station mobile.

A titre d'exemple, les informations collectées à l'étape 400 peuvent également comprendre une localisation actuelle du satellite, ou une zone de couverture, déterminant les stations émettrices clientes avec lesquelles le transfert de données peut avoir lieu.

Le procédé comprend ensuite la détermination d'un ordre de priorité 500 des stations émettrices clientes pour la mise en œuvre de transferts de données depuis une station émettrice vers le satellite. Cette détermination est mise en œuvre à partir des données collectées et des probabilités de succès de transfert de données calculées à l'étape 300 de façon à respecter les contraintes suivantes :
- Eviter que des données soient périmées par rapport aux durées de validité associées à chaque station émettrice cliente ; en d'autres termes transférer les données avant l'expiration de la durée de validité des données, et
- Eviter que les stations émettrices clientes dépassent leur capacité de stockage, c'est-à-dire que le volume de données stocké par une station émettrice cliente atteigne la capacité de stockage de la station.

L'ordre de priorité associé aux stations émettrices clientes est par exemple déterminé de sorte à satisfaire en priorité la condition d'évitement que les données soient périmées par rapport aux durées de validité associées à chaque station émettrice cliente.

A titre d'exemple, certaines stations émettrices clientes peuvent présenter des statuts de priorité différents, ces statuts étant indépendants des contraintes mentionnées ci-avant, la détermination de l'ordre de priorité 500 peut également tenir compte de ces statuts.

La condition visant à éviter que les données soient périmées doit par exemple être respectée moyennant une marge de sécurité temporelle déterminée, par exemple au moins un jour, c'est-à-dire que les données doivent être transférées avant une date égale à l'expiration de la durée de validité des données, de laquelle est soustraite la marge de sécurité temporelle appliquée. La vérification de cette condition est déterminée en fonction du volume de données à transférer, des probabilités de succès de transfert de données, de la durée de validité des données et de la marge associée.

La condition visant à éviter que les stations émettrices dépassent leur capacité de stockage doit par exemple être respectée moyennant une marge de sécurité volumétrique déterminée sur la capacité de stockage, par exemple 5% de la capacité de stockage, et une marge de sécurité temporelle déterminée sur le délai restant avant d'atteindre la capacité de remplissage, par exemple au moins un jour. Selon ces exemples de marge, les données doivent être transférées au plus tard un jour avant que le volume de données stockées par la station n'atteigne 95% de la capacité de stockage de la station.

La vérification de cette condition est par exemple déterminée en fonction du volume de données à transférer, des probabilités de succès du transfert de données, du taux de remplissage de la station, de sa capacité de stockage et des marges associées.

Une fois l'ordre de priorité déterminé, le procédé comprend une étape 600 de sélection d'une station émettrice cliente active, c'est-à-dire de la station émettrice avec laquelle le transfert de données va avoir lieu. Cette étape peut par exemple comprendre, pour la première station dans l'ordre de priorité, la validation de conditions temps réel favorables concernant la couverture nuageuse de la station émettrice.

Par exemple, cette validation peut comprendre une vérification de prévisions temps-réel concernant la couverture nuageuse de la station émettrice, c'est-à-dire la prévision que les conditions sont favorables (i.e. absence de couverture nuageuse) et vont le rester à court-terme, par exemple dans une période déterminée à venir de quelques minutes à quelques heures. Alternativement ou en complément, chaque station émettrice 20 peut comprendre une balise lumineuse, et la validation des conditions temps réel favorables peut comprendre une mesure du scintillement de la balise lumineuse de la station émettrice considérée, par exemple par le satellite, et transmise au terminal 40 de supervision. En effet, l'atmosphère provoque un scintillement des sources lumineuses terrestre observable depuis l'espace. Plus le scintillement est important et plus la condition est défavorable.

En cas de prévisions défavorables, c'est-à-dire en cas de prévision d'une couverture nuageuse défavorable à la station émettrice à court-terme, la deuxième station par ordre de priorité est sélectionnée, sous réserve également de validation des conditions favorables de couverture nuageuse, et ainsi de suite jusqu'à sélectionner la première station, dans l'ordre de priorité établi, pour laquelle les prévisions temps réel sur la couverture nuageuse sont favorables.

Les prévisions temps réel sur la couverture nuageuse peuvent par exemple être acquises par un capteur dédié et observant le ciel, ce capteur pouvant être intégré dans le terminal 40 de supervision ou en communication avec ce dernier pour permettre la transmission en temps réel des informations de couverture nuageuse.

Une fois la station sélectionnée, le procédé comprend une étape 700 d'activation du transfert de données entre la station sélectionnée et le satellite. Cette étape peut comprendre l'envoi par le terminal 40 de supervision, à la station sélectionnée d'une instruction visant à procéder au démarrage du transfert.

A titre d'exemple, et comme décrit plus en détails ci-après, le transfert des données peut être un transfert partiel, c'est-à-dire qu'une partie seulement des données stockées par la station sélectionnée sont transférées au satellite. Dans ce cas, l'instruction envoyée à la station sélectionnée peut comprendre le volume de données à transférer pour le transfert partiel. Les données présentant une durée de validité moindre sont transférées en priorité. Après transfert de données, la durée de validité est mise à jour. La fin du transfert de données correspond par exemple à l'écoulement d'une temporisation déterminée ou au déclenchement d'une alerte représentative d'une interruption à venir de la liaison de communication optique ou encore d'un seuil atteint relativement au volume de données transférées.

Une fois le transfert de données effectué, le procédé peut par exemple recommencer à partir de l'étape 400 de collecte des données visant à déterminer l'ordre de priorité, de manière à remettre à jour l'ordre de priorité à chaque sélection de la station émettrice active.

En variante, le procédé peut comprendre au moins une itération supplémentaire de l'étape 600 de sélection de la prochaine station émettrice cliente active pour laquelle les conditions temps réel sont favorables, en reprenant les stations dans l'ordre de priorité déterminé à l'étape 500 et en excluant par exemple celle pour laquelle les données ont déjà été transférées. Après un nombre déterminé d'itérations des étapes 600 et 700 ou après l'expiration d'un délai déterminé à partir de la première détermination de l'ordre de priorité, le procédé reboucle par exemple à l'étape 400 de collecte des données visant à déterminer un nouvel ordre de priorité pour actualiser cet ordre. Cette alternative permet d'enchaîner plus rapidement plusieurs étapes de transfert de données mais avec des données pouvant être moins précises puisque l'ordre de priorité est réactualisé moins fréquemment.

Dans certains cas, et notamment dans le cas où il n'est pas possible de transférer complètement le volume de données stockées dans la station la plus prioritaire sans enfreindre les conditions mentionnées ci-avant pour les autres stations, un transfert partiel peut avoir lieu, c'est-à-dire qu'une station émettrice 20 transfère au satellite 10 un volume de données strictement inférieur au volume total stocké par la station. Dans ce cas, le volume de données à transférer lors de ce transfert partiel est par exemple déterminé de manière à placer la station émettrice cliente dans un état sécurisé :
- dans lequel les données à transférer ne sont pas périmées avec une marge de sécurité temporelle déterminée, cette marge temporelle étant de préférence supérieure à celle concernant la contrainte sur la validité des données appliquée à l'étape 400, et
- dans lequel la capacité de stockage n'est pas dépassée avec une marge volumétrique déterminée compte-tenu de la marge de sécurité temporelle déterminée, la marge volumétrique étant de préférence supérieure à celle concernant la contrainte sur la capacité de stockage appliquée à l'étape 400.

Par exemple, la marge temporelle de sécurité pour un transfert partiel peut être le double de la marge appliquée pour la détermination de l'ordre de priorité, par exemple deux jours, et la marge volumétrique pour le transfert partiel peut aussi être le double de la marge appliquée pour la détermination 400 de l'ordre de priorité, par exemple 10% de la capacité de stockage.

En référence à la figure 5, on a représenté un exemple d'accès successifs à 51 terminaux produisant des données. En abscisses est représenté le temps exprimé en jours et en ordonnées est représenté l'accès à un terminal au sol parmi 51 terminaux numérotés de 0 à 50. Dans cet exemple simulé, on active successivement les remplissages progressifs des zones mémoire des terminaux de 0 à 50 et on associe à chaque terminal un historique de couverture nuageuse et une couverture nuageuse en temps réel, similaires à une couverture nuageuse en situation réelle. On constate que les accès, dans un premier temps suivent sensiblement l'ordre d'activation des terminaux, mais avec certains sauts vers l'arrière ou vers l'avant (en considérant l'ordre de lancement des terminaux) vers quelques terminaux en raison de la couverture nuageuse. Une première passe d'accès sensiblement de 0 à 50 est ainsi effectuée avec quelques sauts, puis vers t=0.05 jour, l'ordre d'accès aux terminaux produisant des données suit une loi de plus en plus décorrélée de l'ordre d'activation des terminaux. Les accès s'adaptent ainsi à la couverture nuageuse et aux différents remplissages des terminaux produisant des données. Cette simulation a ainsi permis de valider l'approche proposée par le procédé selon l'invention.

## Revendications

1. Procédé de collecte de données par liaison optique, ledit procédé comprenant au moins :
- une étape de collecte (100) des conditions passées de couverture nuageuses d'une pluralité de stations émettrices clientes au sol,
- une étape de collecte (200) des conditions passées de couverture nuageuses d'au moins un centre récepteur de collecte des données au sol,
- une étape de détermination (300), pour une pluralité de couples associant une des stations émettrices clientes audit centre récepteur, de probabilités de succès de transferts de données, via au moins un satellite de télécommunication déterminé, pour plusieurs quantités prédéterminées de données, en fonction d'un nombre de jours alloués au transfert allant de au moins un jour à un nombre prédéterminé de jours, et pour une période déterminée de l'année pour laquelle lesdites probabilités de succès de transferts de données sont déterminées, à partir des conditions passées de couverture nuageuse à la même période de l'année, et à partir des capacités des liens montant et descendant,
- une étape de collecte (400):
∘ Des volumes de données, de chaque station émettrice cliente, en attente de transfert,
∘ Des vitesses de remplissage de chaque station émettrice cliente, par rapport à leur capacité de stockage, et
∘ D'une durée de validité des données produites par chaque station émettrice cliente,
- une étape de détermination (500) d'un ordre de priorité associé aux stations émettrices clientes pour des traitements en série de transferts de volumes de données déterminés de façon à :
∘ éviter que des données soient périmées par rapport aux durées de validité associées à chaque station émettrice cliente, avec une marge de sécurité temporelle déterminée en fonction d'au moins une probabilité de transfert associée à chaque station émettrice clientes,
∘ éviter que les stations émettrices clientes dépassent leur capacité de stockage, avec une marge de sécurité volumétrique déterminée et une marge de sécurité temporelle déterminée en tenant compte de la vitesse de remplissage par rapport à la capacité de stockage associée à chaque station émettrice cliente, en fonction d'au moins une probabilité de transfert associée à chaque station émettrice cliente,
- une étape de sélection (600) de station émettrice cliente active, comprenant une validation des prévisions temps réel favorables sur la couverture nuageuse en commençant par la station émettrice cliente la plus prioritaire, puis en passant à la station émettrice cliente suivante, selon l'ordre de priorité, en cas de prévisions temps réel défavorables pour la station émettrice cliente la plus prioritaire,
- une étape d'activation (700) du transfert des données pour la station émettrice cliente sélectionnée.

2. Procédé selon la revendication 1, comprenant en outre, après l'activation du transfert des données, la répétition du procédé à partir de l'étape de collecte des volumes de données, des vitesses de remplissage et de la durée de validité des données.

3. Procédé selon la revendication 1 ou 2, dans lequel l'ordre de priorité associé aux stations émettrices clientes est déterminé de sorte à satisfaire en priorité la condition d'évitement que les données soient périmées par rapport aux durées de validité associées à chaque station émettrice cliente.

4. Procédé selon l'une des revendications précédentes, dans lequel la probabilité de succès de transferts de données, pour plusieurs quantités prédéterminées de données, en fonction d'un nombre de jours alloués au transfert allant de au moins un jour à un nombre prédéterminé de jours, est déterminée par calcul d'une fonction de distribution cumulée.

5. Procédé selon l'une des revendications précédentes, dans lequel la marge de sécurité temporelle déterminée pour la détermination de l'ordre de priorité est d'au moins un jour.

6. Procédé selon l'une des revendications précédentes, dans lequel la marge de sécurité volumétrique déterminée pour la détermination de l'ordre de priorité est d'au moins 5% de la capacité de stockage de la station cliente émettrice considérée.

7. Procédé selon l'une des revendications précédentes, dans lequel à l'étape d'activation du transfert, le transfert réalisé est au moins partiel de façon à placer la station émettrice cliente dans un état sécurisé dans lequel les données produites ne sont pas périmées avec une marge de sécurité temporelle déterminée dans lequel la capacité de stockage n'est pas dépassée avec une marge volumétrique déterminée compte-tenu de la marge de sécurité temporelle déterminée.

8. Procédé selon la revendication précédente, dans lequel la marge de sécurité temporelle pour assurer l'état sécurisé d'une station émettrice cliente est d'au moins deux jours, etla marge de sécurité volumétrique est d'au moins 10% de la capacité de stockage de la station émettrice cliente considérée.

9. Procédé selon l'une des revendications précédentes, dans lequel les prévisions temps réel sur la couverture nuageuse sont générées par un capteur (50) observant le ciel.

10. Produit programme d'ordinateur, comprenant des instructions de code pour la mise en œuvre du procédé selon l'une des revendications précédentes, lorsqu'il est mis en œuvre par un calculateur.

11. Système (1) de transfert de données par liaison optique, ledit système comprenant une pluralité de stations émettrices clientes (20) au sol, au moins un récepteur de collecte (30) des données au sol, au moins un satellite (10) apte à être en communication par liaison optique avec les stations émettrices (20) et le récepteur de collecte (30), et un terminal de supervision (40) configuré pour mettre en œuvre le procédé selon l'une des revendications 1 à 9.

12. Système (1) selon la revendication précédente, dans lequel le terminal de supervision est intégré dans une station de commande au sol et apte à communiquer avec les stations émettrices au sol (20) pour l'envoi d'instructions d'activation de transfert de données depuis lesdites stations vers le satellite (10).

## Patentansprüche

1. Verfahren zum Sammeln von Daten mittels optischer Verbindung, wobei das Verfahren mindestens aufweist:
- einen Sammelschritt (100) zum Sammeln vergangener Bewölkungsbedingungen mehrerer Client-Sendestationen am Boden,
- einen Sammelschritt (200) zum Sammeln vergangener Bewölkungsbedingungen mindestens eines Datensammel-Empfangszentrums am Boden,
- für mehrere Paare bestehend aus einer der Client-Sendestationen und dem zugehörigen Empfangszentrum, einen Bestimmungsschritt (300) zum Bestimmen von Wahrscheinlichkeiten erfolgreicher Übertragungen von Daten via mindestens einen Telekommunikationssatelliten für mehrere vorgegebene Datenmengen als Funktion einer Anzahl von bewilligten Übertragungstagen, die von mindestens einem Tag bis zu einer vorgegebenen Anzahl von Tagen reichen, und für einen bestimmten Zeitraum des Jahres, für den die Wahrscheinlichkeiten erfolgreicher Datenübertragungen anhand vergangener Bewölkungsbedingungen in dem gleichen Zeitraum des Jahres und anhand von Uplink- und Downlink-Kapazitäten bestimmt werden,
- einen Sammelschritt (400) zum Sammeln:
° von Datenvolumina jeder Client-Sendestation, die zur Übertragung bereitstehen,
° von Füllgeschwindigkeiten jeder Client-Sendestation im Verhältnis zu ihrer Speicherkapazität, und
° einer Gültigkeitsdauer der von jeder Client-Sendestation erzeugten Daten,
- einen Bestimmungsschritt (500) zum Bestimmen eines den Client-Sendestationen entsprechenden Prioritätsrangs für reihenweise Behandlungen von Übertragungen von bestimmten Datenvolumina, und zwar derart, um
° zu vermeiden, dass Daten in Hinblick auf die entsprechenden Gültigkeitsdauern jeder Client-Sendestation verfallen, mit einer zeitlichen Sicherheitsmarge, die zumindest als Funktion einer entsprechenden Übertragungswahrscheinlichkeit jeder Client-Sendestation bestimmt wird,
° zu vermeiden, dass die Client-Sendestationen ihre Speicherkapazität überschreiten, mit einer bestimmten volumetrischen Sicherheitsmarge und einer zeitlichen Sicherheitsmarge, die unter Berücksichtigung der Füllgeschwindigkeit im Verhältnis zu der entsprechenden Speicherkapazität jeder Client-Sendestation zumindest als Funktion einer entsprechenden Übertragungswahrscheinlichkeit jeder Client-Sendestation bestimmt wird,
- einen Auswahlschritt (600) zum Auswählen einer aktiven Client-Sendestation, aufweisend eine Validierung von günstigen Echtzeit-Vorhersagen über die Bewölkung, beginnend mit der prioritärsten Client-Sendestation, dann im Fall von ungünstigen Echtzeit-Vorhersagen für die prioritärste Client-Sendestation übergehend zu der nächsten Client-Sendestation in der Prioritätsrangfolge,
- einen Aktivierungsschritt (700) zum Aktivieren der Datenübertragung für die ausgewählte Client-Sendestation.

2. Verfahren nach Anspruch 1, aufweisend ferner nach der Aktivierung der Datenübertragung die Wiederholung des Verfahrens ab dem Sammelschritt zum Sammeln von Datenvolumina, Füllgeschwindigkeiten und Gültigkeitsdauern von Daten.

3. Verfahren nach Anspruch 1 oder 2, in welchem der entsprechende Prioritätsrang der Client-Sendestationen derart bestimmt wird, um vorrangig die Bedingung des Vermeidens, dass die Daten in Hinblick auf die entsprechenden Gültigkeitsdauern jeder Client-Sendestation verfallen, zu erfüllen.

4. Verfahren nach einem der vorstehenden Ansprüche, in welchem die Wahrscheinlichkeit erfolgreicher Datenübertragungen für mehrere vorgegebene Datenmengen als Funktion einer Anzahl bewilligter Übertragungstage, die von mindestens einem Tag bis zu einer vorgegebenen Anzahl von Tagen reichen, durch Berechnen einer kumulierten Verteilungsfunktion bestimmt wird.

5. Verfahren nach einem der vorstehenden Ansprüche, in welchem die zeitliche Sicherheitsmarge, die für die Bestimmung des Prioritätsrangs bestimmt wird, mindestens ein Tag ist.

6. Verfahren nach einem der vorstehenden Ansprüche, in welchem die volumetrische Sicherheitsmarge, die für die Bestimmung des Prioritätsrangs bestimmt wird, mindestens 5% der Speicherkapazität der betrachteten Client-Sendestation ist.

7. Verfahren nach einem der vorstehenden Ansprüche, in welchem in dem Schritt der Aktivierung der Übertragung die Übertragung mindestens teilweise derart durchgeführt wird, dass die Client-Sendestation in einen gesicherten Zustand gesetzt wird, in dem die erzeugten Daten mit einer bestimmten zeitlichen Sicherheitsmarge nicht verfallen und in dem die Speicherkapazität mit einer volumetrischen Sicherheitsmarge, die unter Berücksichtigung der bestimmten zeitlichen Sicherheitsmarge bestimmt wird, nicht überschritten wird.

8. Verfahren nach dem vorstehenden Anspruch, in welchem die zeitliche Sicherheitsmarge zur Gewährleistung des gesicherten Zustands einer Client-Sendestation mindestens zwei Tage ist, und die volumetrische Sicherheitsmarge mindestens 10% der Speicherkapazität der betrachteten Client-Sendestation ist.

9. Verfahren nach einem der vorstehenden Ansprüche, in welchem die Echtzeit-Vorhersagen über die Bewölkung von einem den Himmel beobachtenden Sensor (50) generiert werden.

10. Computerprogrammprodukt, aufweisend Code-Befehle für die Durchführung des Verfahrens nach einem der vorstehenden Ansprüche, wenn es von einem Rechner ausgeführt wird.

11. System (1) zur Übertragung von Daten mittels optischer Verbindung, wobei das System aufweist:
mehrere Client-Sendestationen (20) am Boden,
mindestens einen Datensammelempfänger (30) am Boden,
mindestens einen Satelliten (10), der eingerichtet ist, mittels optischer Verbindung in Kommunikation mit den Sendestationen (20) und dem Sammelempfänger (30) zu sein, und
ein Überwachungsterminal (40), das konfiguriert ist, das Verfahren nach einem der Ansprüche 1 bis 9 durchzuführen.

12. System (1) nach dem vorstehenden Anspruch, in welchem das Überwachungsterminal in eine Boden-Kommandostation integriert ist und eingerichtet ist, mit den Boden-Sendestationen (20) zu kommunizieren, um dorthin Befehle zu schicken, die Datenübertragung von den Stationen zu dem Satelliten (10) aktivieren.

## Claims

1. Method for data collection by optical link, said method comprising at least:
- a step of collecting (100) past cloud coverage conditions client transmitting stations on the ground,
- a step of collecting (200) past cloud coverage conditions of at least one data receiving centre on the ground,
- a step of determining (300), for a plurality of pairs associating one of the client transmitting stations to said receiving centre, the likelihood of success of data transfers, via at least one determined telecommunication satellite, for several predetermined amounts of data, according to a number of days allocated to the transfer ranging from at least one day to a predetermined number of days, and for a specified period of the year for which said likelihood of success of data transfers is determined, based on past cloud coverage conditions at the same period of the year, and on uplink and downlink capacities,
- a step of collecting (400):
∘ Data volumes, from each client transmitting station, pending transfer,
∘ Filling rates of each client transmitting station, in relation to their storage capacity, and
∘ A period of validity of the data produced by each client transmitting station,
- a step of determining (500) a priority order associated with the client transmitting stations for bulk processing of transfers of determined data volumes so as to:
∘ prevent the data from expiring with respect to the validity periods associated with each client transmitting station, with a time safety margin determined according to at least one likelihood of transfer associated with each client transmitting station,
∘ prevent the client transmitting stations from exceeding their storage capacity, with a determined volume safety margin and a determined time safety margin taking into account the filling rate relative to the storage capacity associated with each client transmitting station, according to at least one likelihood of transfer associated with each client transmitting station,
- a step of selecting (600) an active client transmitting station, comprising validation of the favourable real-time forecasts on the cloud coverage starting with the most priority client transmitting station, then moving to the next client transmitting station, according to the order of priority, in case of unfavourable real-time forecasts for the most priority client transmitting station,
- a step of activating (700) the data transfer for the selected client transmitting station.

2. Method according to claim 1, further comprising, after activating the data transfer, repeating the method from the step of collecting the data volumes, filling rates, and the period of validity of the data.

3. Method according to claim 1 or 2, wherein the order of priority associated with the client transmitting stations is determined so as to satisfy as a priority the condition for preventing the data from expiring relative to the periods of validity associated with each client transmitting station.

4. Method according to any one of the preceding claims, wherein the likelihood of successful data transfers, for several predetermined amounts of data, according to a number of days allocated to the transfer ranging from at least one day to a predetermined number of days, is determined by calculating a cumulative distribution function.

5. Method according to any one of the preceding claims, wherein the time determined safety margin for determining the order of priority is at least one day.

6. Method according to any one of the preceding claims, wherein the determined volume safety margin for determining the order of priority is at least 5% of the storage capacity of the client transmitting station in question.

7. Method according to any one of the preceding claims, wherein in at the step of activating the transfer, the transfer performed is at least partial so as to place the client transmitting station in a secure state in which the data produced are not expired with a determined time safety margin in which the storage capacity is not exceeded with a volume margin determined taking account of the determined time safety margin.

8. Method according to the preceding claim, wherein the time safety margin to ensure the secure state of a client transmitting station is at least two days, and the volume safety margin is at least 10% of the storage capacity of the client transmitting station in question.

9. Method according to any one of the preceding claims, wherein the real-time forecasts on the cloud cover are generated by a sensor (50) observing the sky.

10. Computer program product, comprising code instructions for implementing the method according to any one of the preceding claims, when implemented by a computer.

11. System (1) for data transfer by optical link, said system comprising a plurality of client transmitting stations (20) on the ground, at least one data receiving centre (30) on the ground, at least one satellite (10) capable of being in communication by optical link with the transmitting stations (20) and the data receiving centre (30), and a supervision terminal (40) configured to implement the method according to any one of claims 1 to 9.

12. System (1) according to the preceding claim, wherein the supervision terminal is integrated into a control station on the ground and capable of communicating with the transmitting stations (20) on the ground for sending data transfer activation instructions from said stations to the satellite (10).
